# EUROPEAN PATENT APPLICATION

(11) **EP 4 654 117 A1**
(43) Date of publication of application: **26.11.2025**
(21) Application number: 24176910.8
(22) Date of filing: 20.05.2024
(51) Int. Cl.: G06Q 50/04, G01N 15/0205, G01N 21/51, G06T 11/20

(54) **MATERIAL CHARACTERISATION TREND ANALYSIS**

(71) Applicant: Malvern Panalytical Limited, Malvern, Worcestershire WR14 1XZ (GB)
(72) Inventor: MALM, Alex, Malvern, WR14 1XZ (GB); BANCARZ, Darrell, Malvern, WR14 1XZ (GB)
(74) Representative: Barker Brettell LLP

(57) **Abstract**

A computer implemented method of defining a multi-variable study is provided. The method comprises: selecting a plurality of independent variables for analysis of a material property by one or more physical characterisation methods, determining or receiving a set of values for each of the independent variables; displaying an array of analyses, the array comprising an element for each combination of values of the independent variables and having a first dimension corresponding with a first independent variable and a second dimension corresponding with a second independent variable; providing a user interface by which a user can select a subset of the array elements to define a study for analysis; and determining a trend from the study.

## Description

### Field of the invention

The present invention relates to material/particle characterisation, and to improvements in material/particle characterisation.

### Background

Particles may be characterised using light diffraction, in which a beam of light illuminates a sample comprising particles and the variation in scattered light over a range of scattering angles is detected. The scattering pattern (i.e. the variation in the intensity of scattered light vs scattering angle) can be used to determine an average particle size, or a particle size distribution, based on Mie scattering theory.

A light diffraction particle characterisation instrument typically comprises a light source and detectors arranged to receive light scattered from the sample at different angles to the illuminating light beam. The characteristics of the particles (e.g. a particle size or particle size distribution) can be inferred from the distribution of scattering intensity with respect to the scattering angle. This sort of analysis, in which the temporal characteristics of scattered light are not relevant to the characterisation, may be referred to as static light scattering (SLS), multi-angle light scattering (MALS) or laser diffraction (the light source typically being a laser).

In such instruments the illuminating light is typically linearly polarised and the detectors are arranged to detect light in a scattering plane, which is defined as the plane normal to the polarisation direction of the illuminating light beam. Scattering intensity may vary in different directions relative to the polarisation orientation. For example, non-spherical particles may result in different scattering intensity in directions normal to and parallel with the polarisation direction of the illuminating light beam. Some instruments therefore include detectors for receiving light scattered at different directions to the polarisation orientation of the illuminating light beam.

In addition to characterising particles based on the pattern of diffracted light, it is also possible to characterise particles based on how the intensity of light scattering in a particular scattering direction varies over time. Brownian motion means that particles with a lower hydrodynamic radius produce scattered light that fluctuates more rapidly than particles with a higher hydrodynamic radius.

This type of analysis is referred to as dynamic light scattering (DLS) or photon correlation spectroscopy (PCS). A spatially coherent monochromatic light source is typically used in dynamic light scattering and scattered light is detected over a relatively narrow range of scattering angles (e.g. over a range of scattering angles of 5 degrees or less, or 2 degrees or less, so that the q-vector of the scattered light is relatively well defined). A photon counting detector such as an avalanche photodiode is typically employed, which is capable of providing a time history of scattering intensity with high temporal resolution. An autocorrelation is performed to determine a correlogram of the light scattering intensity, and the correlogram processed (e.g. using Cumulants or a nonlinear least squares method) to determine a particle size or particle size distribution. As an alternative (but equivalent) to correlation, a frequency domain analysis can be performed (e.g. using Fast Fourier Transform analysis).

In some instruments, multiple scattering angles may be detected, and analysis performed on the data from multiple scattering angles (each with well-defined q-vectors). Such analysis may be termed Multi-Angle DLS (MADLS).

Light scattering can be used to infer other properties of materials - for example a surface zeta potential can be inferred from light scattering from particles with known characteristics (in instruments that are also capable of DLS analysis, for example). Electrophoretic light scattering, in which light is scattered from particles that are subjected to an electrical field, can be used, for example, to determine a zeta potential.

A series of measurements may need to be performed in order to investigate or measure a physical parameter of a particulate material. Parameters that can be inferred from measurements performed on a single sample may not be very informative by themselves - it instead sometimes the variation of a measured parameter with respect to some other variable that is of interest. Examples of variables of interest include: sample age (time), sample conditions such as pH, constituent concentrations (e.g. salt, stabiliser, etc), storage conditions (e.g. temperature), applied stress (e.g. temperature gradient, freeze-thaw, mixing), etc.

Variations in parameters that are determined over a sequence of measurements may be used to derive a secondary parameter, based on measurements as a function of a variable.

For example, in the context of a static light scattering measurement, scattering intensity as a function of sample concentration maybe used to derive Molecular weight and/or B22, the second virial coefficient. A similar trend of concentration may be used to derive an interaction parameter, kD, by capturing diffusion coefficient values via DLS.

Both DLS and SLS measurements as a function of temperature may be used to derive an aggregation or other thermally induced sample change descriptor such as an aggregation temperature TAgg, at which aggregation starts.

While it is possible to review and analyse such trends with a tabulated visualization of measurement data, this becomes increasingly complicated where multiple trend variables or parameters need to be assessed.

A solution to this problem would be useful.

### Summary

According to a first aspect of the invention, there is provided a computer implemented method of defining a multi-variable study, comprising:
selecting a plurality of independent variables for analysis of a material property by one or more physical characterisation methods,
determining or receiving a set of values for each of the independent variables;
displaying an array of analyses, the array comprising an element for each combination of values of the independent variables and having a first dimension corresponding with a first independent variable and a second dimension corresponding with a second independent variable;
providing a user interface by which a user can select a subset of the array elements to define a study for analysis; and
determining a trend from the study.

The method may further comprise configuring an instrument to perform the physical characterisation method to determine analysis data for each element of the study.

The method may further comprise storing the analysis data in a database comprising a record for each element of the study, wherein each record includes the values of the independent variables corresponding with that element.

The method may further comprise receiving analysis data resulting from performing a physical characterisation process over at least some of the set of values of the independent variables and storing the analysis data in a database.

Determining a trend from the study may comprise performing an analysis on the analysis data comprised in the study to determine a material property from the analysis data.

The physical characterisation method may comprise performing particle characterisation in which scattered light from particles of a sample is detected and a material property is inferred from the scattered light.

The user interface may be configured to allow the user to select at least one of: single elements from the array, 1-dimensional sub-arrays of the array; 2-dimensional sub-arrays of the array.

The user interface may be configured to display the array as a three dimensional array, in which a third dimension of the array corresponds with a third independent variable.

The user interface may comprise a variable selection interface, by which a user can define the variables and define the set of values for each variable.

The user interface may comprise an array dimension selection interface, by which a user can define which of the plurality of independent variables comprise the first independent variable, the second independent variable, and optionally the third independent variable.

The user interface may be configured to generate one or more trend plots, each trend plot showing a trend of a material property with respect to the independent variables for the selected elements of the study.

The study may comprise a 2-dimensional sub array of the array, and the one or more trend plots may comprise a 3-dimensional plot or map showing the value of the material property with respect to two independent variables.

The user interface may be configured to generate one or more data plots, each data plot comprising a data series for each element of the study.

According to a second aspect, there is provided an instrument for particle characterisation, the instrument comprising:
a sample holder for holding a sample comprising particles;
a light source for illuminating the sample with a light beam, thereby producing scattered light by the interaction of the light beam with the particles;
a detector arranged to detect the scattered light and thereby produce scattering data;
a computer arranged to receive the scattering data and determine a characteristic of the particles therefrom; wherein the computer is configured to perform the method of any preceding claim.

According to a third aspect, there is provided a non-transient computer readable medium, comprising instructions for configuring one or more processor to perform the method according to the first aspect.

In the context of the third aspect, selecting a plurality of independent variables for analysis of a material property by one or more physical characterisation methods may comprise receiving a user selection via a user interface.

The features of each aspect, including optional features, may be combined with those of any other aspect, Features described with reference to embodiments may similarly be combined with features described with reference to an aspect, including optional features. Features described with reference to a method may equally be employed in the products according to the second or third aspect.

### Detailed description

Embodiments of the invention will be described, purely by way of example, with reference to the accompanying drawings, in which:
Figure 1 is a schematic illustration of a device for particle characterisation by light diffraction (static light scattering);
Figure 2 is a schematic illustration of a device for particle characterisation by dynamic light scattering;

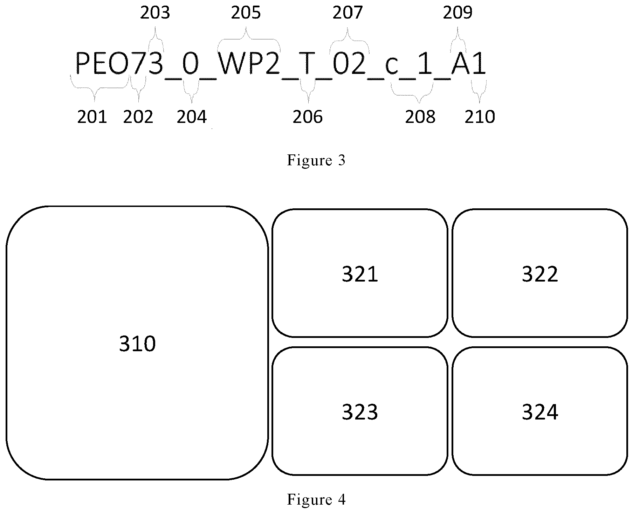

Figure 3 shows an example naming approach for a file comprising analysis data;
Figure 4 shows a schematic graphical user interface in which data trends can be plotted by selecting multiple analysis data files;
Figures 5 shows example detail of a data file list from the interface of Figure 4;
Figure 6 shows a trend graph of count rate with respect to concentration obtained from multiple data files;
Figure 7 shows overlaid plots of particle size distribution for multiple data files;
Figure 8 shows a trend of Z-average with respect to concentration obtained from multiple data files;
Figure 9 shows overlaid autocorrelation functions obtained from multiple data files;
Figure 10 shows a schematic graphical user interface layout according to an embodiment;
Figure 11 shows an example variable selection interface and study list interface, which may be used in the interface of Figure 10;
Figure 12 shows a study view comprising an analysis array and progress indicator;
Figure 13 shows a schematic of a 3D analysis array with dimensions corresponding with pH, concentration and temperature, showing trend graphs and studies extracted from 1D subsets (rows, columns etc) of the array;
Figure 14 shows a schematic of a 3D analysis array with dimensions corresponding with pH, concentration and temperature, showing trend graphs and studies that can be extracted from 2D subsets of the array;
Figure 15 shows a schematic of a 3D analysis array with dimensions corresponding with pH, concentration and analysis type, showing trend graphs and studies that can be extracted from 1D subsets of the array;
Figure 16 shows a schematic of a 3D analysis array with dimensions corresponding with pH, surfactant concentration and sodium chloride concentration, showing 2D intensity maps that can be extracted from 2D subsets of the array; and
Figure 17 shows a schematic of a 3D analysis array with sparsity, having dimensions corresponding with pH, surfactant concentration and sodium chloride concentration, showing 2D intensity maps that can be extracted from 2D subsets of the array.

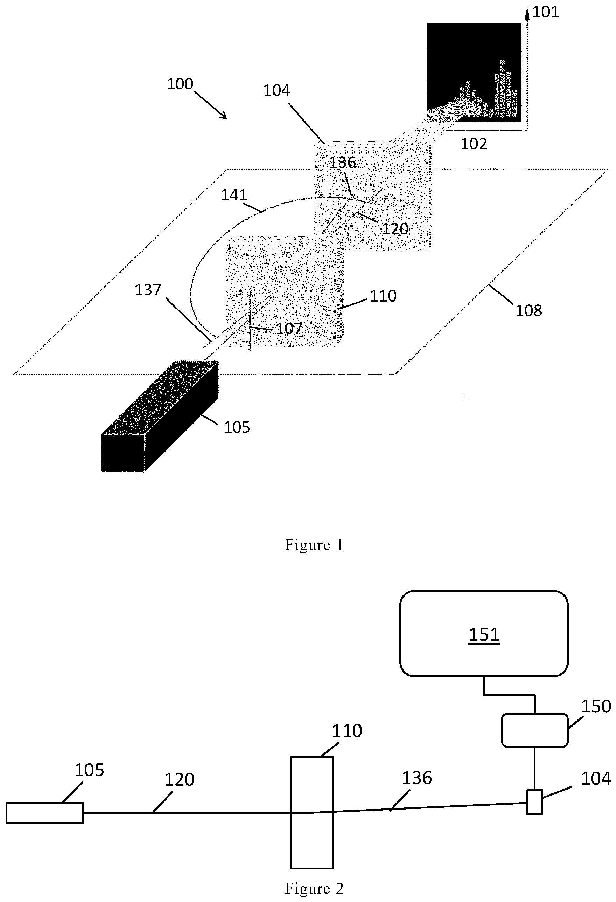

Referring to Figure 1, an instrument 100 for characterisation of particles by light diffraction is depicted schematically. The apparatus 100 comprises a light source 105, sample cell 110 and detector 104.

The light source 105 is typically monochromatic and preferably spatially coherent, so typically comprises a laser (although some instruments comprise an LED light source). The light source 105 creates an illumination beam 120 that illuminates a sample. The interaction of the light beam 120 with particles of the sample results in scattering/diffraction of the light beam 120. The pattern of scattering that is produced is characteristic of the particle size (and/or particle size distribution).

The sample cell 110 supports and/or contains a sample comprising particles suspended in a liquid or gas phase diluent and may comprise a cuvette, flow cell or slide (for supporting a droplet of sample).

The detector 104 is configured to detect the pattern of scattered light resulting from the interaction of the illumination beam 120 with the particles of the sample, recording the intensity of detected scattered light 101 at several different angles 102. A particle size or particle size distribution can be calculated from the variation in scattering intensity at different scattering angles, for example using Mie scattering theory. A computer (not shown) may be configured to perform this calculation, and to display the results to a user on a display screen (or to store information resulting from the calculation).

The illumination light beam 120 is typically linearly polarised. In this example, the polarisation orientation 107 is vertical. Scattered light is often detected in a scattering plane 108, which is defined as a plane that includes the illumination light beam 120 in the sample and which is normal to the polarisation orientation 107 of the illumination light beam 120 in the sample. A range of scattering angles 141 can be detected, including forward scattered light 136 (with a component of propagation direction in the same direction as the illumination light beam 120) and backward scattered light 137 (with a component of propagation direction in the opposite direction to the illumination light beam 120).

It is known to employ two light sources, each having a different wavelength. For example, the instrument may include a red laser and a blue LED which illuminate the sample along different optical paths. In order to avoid confusion between scattering at different wavelengths (which may make inversion of the scattering pattern more difficult or impossible), sequential illumination and/or dedicated detectors are used.

Referring to Figure 2, a schematic of a DLS instrument is shown, comprising: light source 105, sample cell 110, detector 104, processor 150 and display 151.

The light source 105 is typically a laser, and produces an illumination light beam 120 that illuminates a sample within the sample cell 110. The sample comprises a diluent in which particles are suspended. Light is scattered from the particles in the sample. A detection optical path 136 from the sample cell 110 to the detector 104 may be defined. Light scattered along the detection optical path 136 will be detected by the detector 104. A scattering volume can de defined by the intersection of the detection optical path 136 and the illuminating light beam 120.

The detector 104 in a DLS instrument is generally arranged to detect light scattered at a relatively small angle to the illuminating light beam 120 (in backscatter or forward scatter). The example of Figure 2 illustrates a forward scatter detection arrangement, but backscatter can equally be used. The detector 104 comprises a photon counting detector, such as an avalanche photodiode. A sequence of photon arrival times can be determined and the processor 150 (which may be part of a computer) used to determine a variation in scattering intensity with respect to time (e.g. by binning photon arrival times). The processor 150 is configured to determine an autocorrelation function from the variation in scattering intensity over time. A fit can be performed on the autocorrelation function to determine particle parameters, such as a Zaverage particle size and/or a polydispersity pdi.

The processor 150 may be configured to display results obtained from the detected scattered light on the display 151. The processor 150 may be configured to cause a graphical user interface to be displayed on the display 151, which a user can interact with in order to setup analyses with the dynamic light scattering instrument.

A computer comprising a processor 150 and display may be used to control the instrument of Figure 1. A computer may be used to control more than one instrument for light scattering material/particle characterisation, and/or to analyse results obtained from more than one instrument.

In some contexts, planning and subsequent analysis of multiple light scattering analyses can impose a significant burden on the user, which becomes greater when studies involve multiple trend variables or parameters that need to assessed.

A practical example of this is in drug candidate screening or formulation screening, in which a range of different characterisation metrics may need to be captured and compared over a range of variables. Stability of candidate molecules or formulation conditions may be assessed using a range of trend measurements. For example: interaction parameters may be obtained from concentration trends; and aggregation conditions may be studied from a temperature ramp applied to aliquots of the same sample type.

Such a study can quickly becomes a large multivariable mass of data which can be difficult to structure, navigate and process.

Existing instruments may comprise a user interface that allows some of these trends to be generated with a method builder. Such a method builder allows a single trend to be run and captured, such as a temperature ramp. Each trend would comprise a separate set of result files and information derived from that set of result files. Where multiple trends need to be compared, the results obtained from multiple single trend analyses may be exported to a spreadsheet or similar analysis package (external to the software tool that is used to obtain the analyses by controlling the instrument(s)) and manually compiled and arranged. Operators in this type of study will therefore rely on complicated naming conventions to track changes between samples. As well as being manually onerous, this means that all variables usually need to be mapped out up front and adding extra variables or points within a trend becomes problematic.

An example user generated record name in such a study is shown below:

| | |
|---|---|
| Record name: | PEO73_0_WP2_T_02_c_1_A1 |
| Key: | aaabc_d_eee_f_gg_hhh_ij |

- aaa: denotes the formulation reference, which in this example is PEO;
- b: denotes the pH, in this example 7;
- c: denotes an arbitrary label corresponding with salt concentration, in this example 3
- d: denotes the relative time point in the study, in this example 0;
- eee: denotes the project phase, in this example WP2;
- f: denotes the sample of interest, in this example T
- gg: denotes an arbitrary label for additive concentration, in the example 02;
- hhh: denotes sample concentration, in this example c_1;
- i: denotes the aliquot, in this example A;
- j: denotes the replicate number, in this example 1.

In the separate analysis package, separate tables would then be generated for parameters of interest as a function of each variable of interest. This quickly becomes challenging to interpret. This is further compounded if any analyses need to be repeated, which may be necessary run due to data quality issues or reprocessed with different analysis settings for example.

While it may be possible record meta data in the instrument user interface, which allows some variables to be tracked, it may be difficult to readily compare trends obtained over different sample conditions. For example, the user may wish to compare trends in particle size with respect to concentration for a number of different sample types or sample conditions (e.g. temperature, formulation conditions, formulation composition etc).

Records selected in the table may be plotted such that particle size is presented as a function of concentration, but within this interface, the results from several sample conditions are all plotted as part of the same series.

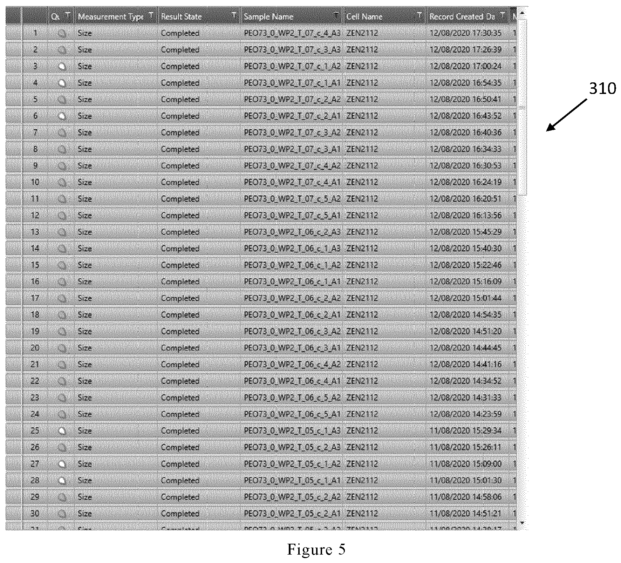

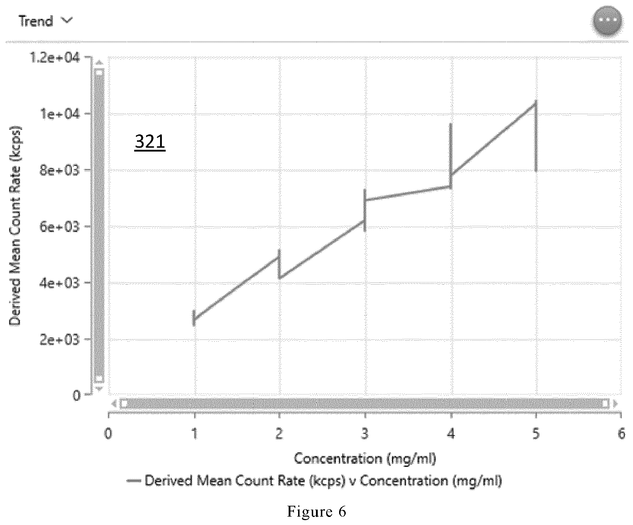

Referring to Figure 5, an example interface is shown in outline, comprising a result file list 310, and graphs 321-324. The result file list 310 is shown in more detail in Figure 6, and comprises a list of measurement files. Each row is a different measurement (in this case, a dynamic light scattering measurement), and each column provides different information about the result file. Columns include: result number, a quality metric, a result state, a sample/file name (for example as described above), a cell name, and a record date. One or more result can be selected from the result file list, and a graph of a particular parameter generated.

The results may comprise a multidimensional analysis - in which more than one analysis is performed as one or more independent variable is changed. This typically results in a set of measurements that can be difficult to sensibly summarise from a list.

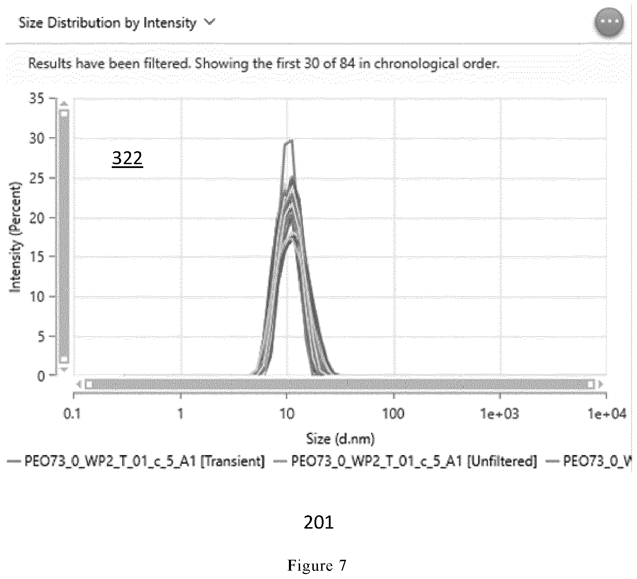

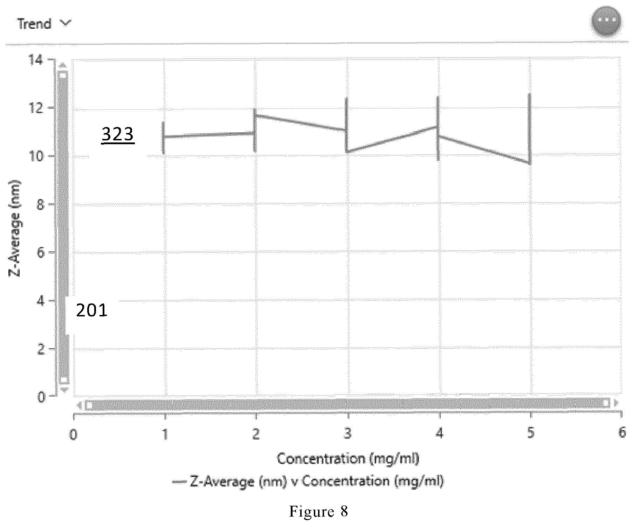

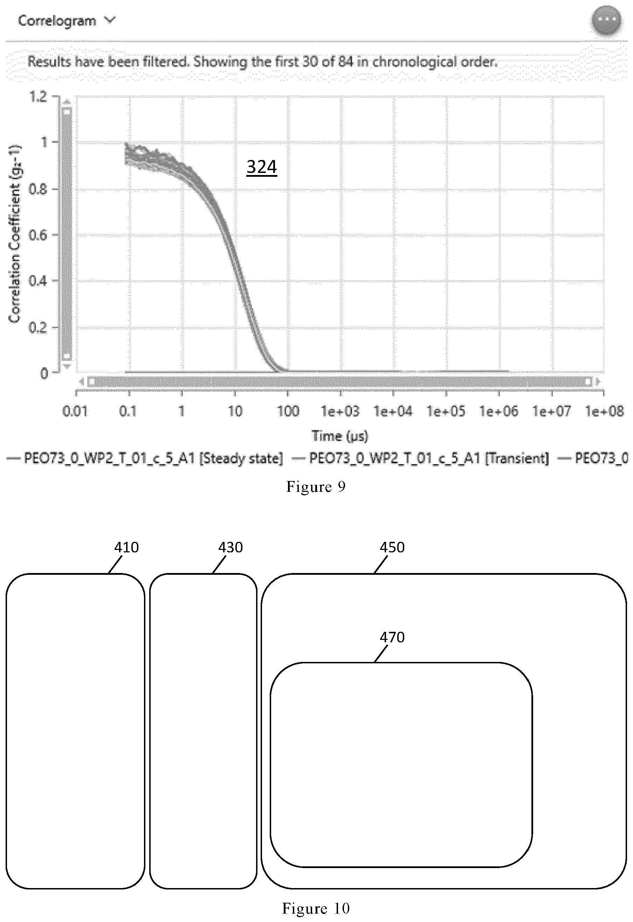

Figure 7 shows an example of a trend graph 321 produced from a set of files from a multi-variable analysis. Trend graph 321 shows derived count rate against concentration. The concentration of the different results is one of 5 discrete values (1, 2, 3, 4 or 5mg/ml). The resulting graph ends up being hard to read, because the different results end up overlaid, with the graph looking like a spiky set of slopes. Figure 8 shows a graph 322 in which a series of particle size distributions are graphed, overlaid on each other. Each series is inferred by performing a dynamic light scattering analysis. There are a large number of lines. This is a result of selecting a large number of results from the linear result file list 310. It can be difficult to select appropriate subsets from the result file list in order to understand trends in the data. Figure 9 shows a graph 323 in which a Z-average particle size (obtained by DLS) is plotted with respect to concentration. The resulting plot is similar to that of Figure 7 - a spiky set of slopes that is hard to interpret.

Software packages for statistical analysis may allow categorization of data for any variables that are available. This may allow different trends to be produced, but the means of generating these trends requires several steps to either include or exclude certain data sets and would also inherently be missing any of the secondary parameter analysis relevant to a light scattering instrument (for example, molecular weight, B22, second virial coefficient, etc).

Another deficiency of collating separate methods for separate trends is that it may mean that measurements end up being needlessly duplicated. If, for example, a concentration trend is run, and a temperature trend is run, a particle size measurement at a default temperature of 25 degrees may exist in both sets of results.

In order to improve efficiency of data gathering, a high throughput approach using a plate-based measurement technique may be used to measure multiple samples automatically. While this may reduce operator time, it does not reduce the burden of compiling data sets and potentially adds further work and potential for challenges as the sample in each well of the plate needs to be appropriately tracked.

At least some of these problems can be ameliorated by a user interface in which an array of analyses is defined/displayed, with dimensions of the array corresponding with independent variables of a multi-variable analysis.

Figure 10 shows an interface according to an embodiment in outline form, comprising: a method builder interface 410, a study list interface 430, and a study view 450. A computer is configured to cause the interface to be displayed on a screen, and user can interact with the user interface using conventional peripherals (keyboard, mouse etc). The computer may also be configured to automatically configure instruments to perform analyses that are defined in the study that is defined using the interface, to track progress in carrying out measurements of a study, and to allow analysis of results obtained as part of a study (during the study or after the study is completed).

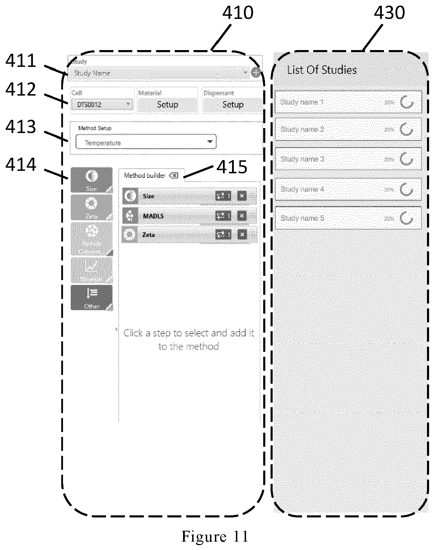

Figure 11 shows a more detailed view of an example method builder interface 410. The method builder interface 410 comprises interface elements for: study naming 411, cell, material and dispersant information 412, variable selection interface 413, analysis selection 414.

The study naming interface 411 enables the user to input a descriptive study name, so that the study can be identified in future. The cell, material and dispersant information interface 412 allows the user to select or define what cell is being used in the study, what material is being analysed and what the dispersant is. The variable selection interface 413 allows the user to select independent variables over which the study will be performed, and to define or select ranges for these variables. The variable selection interface may be configured to select at least one of: temperature, sample concentration, salt (or another additive) concentration, pH, time, formulation, replicates, aliquots etc.

For example, the study may be intended to investigate a relationship between particle characteristics (e.g. Z-average particle size) and pH, temperature and concentration. The user may use the variable selection interface 412 to select each of these independent variables for inclusion in the study, and define the values for the independent variables over which the study is to be performed. For example, for temperature, the user may specify that the study should include temperatures of 20 to 45 degrees C, in increments of 1 degree C. Similarly, ranges and increment values can be used to define values for any independent variables in the study. Linear spacing between values is not essential, and the user may be able to specify a list of values to be used, or intermediate values between the endpoints spaced based on some other criteria.

The different combinations of the independent variables may each be defined as an element of the study. The analysis selection interface 414 enables a user to specify what analysis is to be performed for each element.

Examples of types of analysis that are available will depend on what instruments are being controlled by the software. Any type of instrument that is suitable for the study may be controlled to perform the elements of the study, for example: a dynamic light scattering instrument, a static light scattering instrument, a nano-tracking analysis instrument (in which light scattered from particles is detected by microscopy, and the movement of particles analysed to determine their characteristics), a differential microcalorimetry instrument (in which heat flowing into and out of a sample is studied under varying conditions), a Taylor dispersion analysis instrument (in which the dispersion of a sample flowing through a capillary is studied to investigate the properties of the sample).

For a dynamic light scattering instrument, it may be possible to perform a size analysis (e.g. based on light detected at a single scattering angle), a particle size analysis based on a multi angle dynamic light scattering measurement (in which light is detected at more than one different scattering angle, and the scattering at different angles is jointly inverted to determine the particle characteristics), a zeta potential analysis (in which a zeta potential of the particles are determined). For a static light scattering measurement (or laser diffraction) a particle size or particle size distribution may be determined. In some laser diffraction instruments, the polarisation states of the scattered light may be studied to infer information about particle morphology.

In some studies, the user may specify that the same analysis is to be performed on each element. In other studies, the user may specify that not all elements are analysed in the same way. For example, it may be possible to specify a relatively dense analysis using one type of instrument (e.g. in which every element is analysed by laser diffraction), and a less dense analysis using a second, different, type of instrument (e.g. in which at least some elements are skipped - for example only odd elements in each independent variable dimension may be studied). The interface may provide for a user to select a particular sub-region of the study for enhanced or different analysis (e.g. after a first set of sparse analyses have been performed over the dimensions of the study).

Once a study is defined, it may take some time to perform. At least some of this time may include sample preparation by the user. The interface may prompt the user to prepare samples with the properties required for each element for analysis, and guide the user through the analysis. In some cases, the instrument may be able to control the independent variable automatically (e.g. temperature, or pH in the case where the instrument includes a titrator). In other cases, the user may be required to prepare a sample for each value of the independent variable (e.g. formulation or additive concentration). In cases where user action is required, the interface may be configured to prompt the user to confirm that the sample in the instrument controlled by the computer to perform the analysis is in accordance with the current element of the study.

As measurements are performed by instruments under the control of the computer in accordance with the study, measurement information is stored in a database associated with the study. The database stores all the information associated with the definition of the study, including the independent variables over which the study is performed, and the values of the independent variables associated with each element of the study (and any other information that may be useful even if it remains fixed over the study, such as a particular formulation and so on). The measurement data may comprise raw measurement data, or processed measurement data. Raw measurement data may provide for maximum traceability and flexibility in future analysis (enabling advantages in data processing to be deployed on existing measurement data) at the cost of increased storage requirements. Summarised measurement data in the case of dynamic light scattering measurement may include an autocorrelation function determined from the raw data.

A benefit of this approach is that the relationship between data results within the study can be maintained while changing or revising analysis methods. In the example of particle size analysis by DLS, this may constitute changing the size analysis algorithm or a filtering parameter to allow better comparability between data sets, or to optimize the analysis for the purpose of the study. This workflow is not possible in current solutions where summary data such as ZAverage size is exported and compared in a separate package.

Similarly where compound measurements are performed to calculate a parameter like kD or TAgg, the result of this analysis may be different if different approaches of determining the intermediate data are used, and maintaining access to raw data with linkage between measurements allows flexibility in exploring and optimizing these aspects of the analysis.

The study list interface 430 provides a list of studies that have been defined by the user. The studies may be completed, in progress, or not yet started. A progress indicator may be provided next to each study (which may be listed with the study name that has been defined by the user), showing how progress with the study is completed (e.g. measurements performed/total measurements in the study). The user may select studies from the list to analyse the data and determine sample characteristics and trends. The study need not have to be completed in order to do this - the information that is available may be analysed for each study.

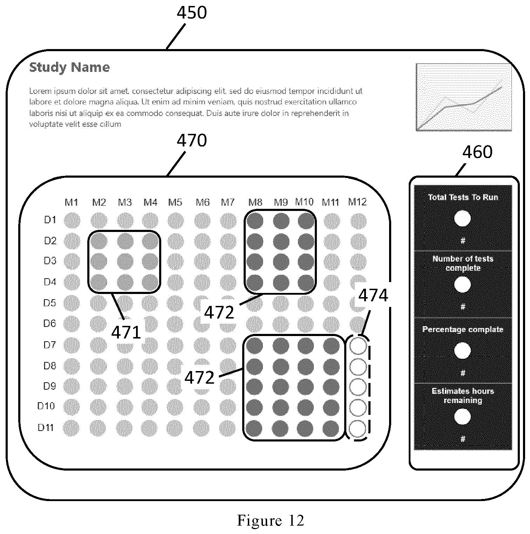

The study view 450 shown in Figure 12 displays an array 470 comprising an element for each combination of values of the independent variables. The array has dimensions corresponding with each of the independent variables in the study. The array may be 2-dimensional or 3-dimensional, at the option of the user. In the case where there are more independent variables than there are available dimensions of the array to be displayed, the interface may be configured to allow the user to select which independent variables are the dimensions of the array. The user may be able to select which dimension of the array corresponds with which independent variable (so that, for example, temperature can be assigned to columns in a 2D array, and pH can be assigned to rows, or vice versa). In the case of a 3D array, the user may be able to select which independent variables correspond with the i, j, k directions of the 3D array. For ease of interpretation, a 2D representation may be preferable, with controls to select which plane in the n-dimensional study is used as the dimensions of the 2D array. Where 3D arrays are described below, a 2D array may also be used to visualise the study and select subsets for trend analysis.

The user may be able to pan the array and to zoom into and out of the array, which may be useful where the array is large. The user interface is also configured to allow the user to select elements of the array to form a subset (which may be a proper subset, in that it does not include all the elements of the array). For example, a user may be able to click on elements of the array to add them to a selection, or click and drag to define a bounding box, within which the elements are added to the current selection. Specific tools may be provided to enable a user to select a row, column or 1D array in the i, j, k direction of a 3D array. A 1D sub-array selection tool may comprise array select buttons each having an associated i, j, k direction, which cause an array to be selected by clicking on the array, but other approaches may also be used. A similar selection tool may be provided for selecting 2D sub-arrays from a 3D array.

In the array 470 shown in Figure 12 is a 2D array, with dimensions of 12x12. Each row in the array D1-12 may denote a different batch or formulation, and each column M1-12 may represent a sample concentration.

The elements of the array are visually indicated by circles (but any visual marker can be used). The elements may change appearance to reflect their status. For example, the user interface may be configured to provide indicate statuses comprising at least one of: i) measurement not performed, ii) measurement performed, available for analysis, iii) currently selected subset, iv) previously selected subset currently undergoing measurement. In Figure 12 the current selection 471 is indicated with a first element appearance, elements with measurement data available for analysis 472 are indicated with a second element appearance, and elements that are currently undergoing measurement 473 are indicated with a third element appearance.

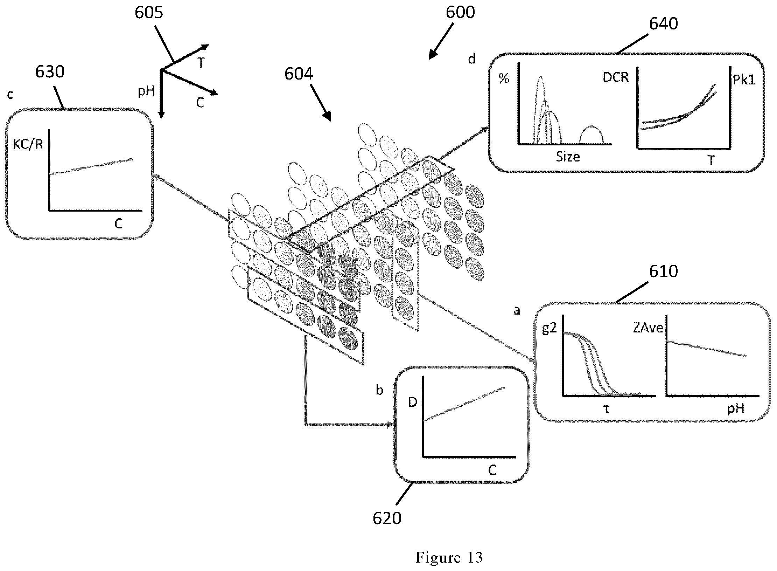

When a user selects elements of the array, they may be provided with control elements that depend on the status of the selected elements. Where some elements that are selected do not have associated measurements, the user may be provided with a control element for initiating measurements on those elements that have not been measured (which may be under the control and/or direction of the computer). Where elements that have been selected include elements for which measurement data is available, the user may be provided with analysis results, showing trends over the selected elements corresponding with the dimensions of the array. The user interface may comprise control elements by which the user is able to select different analysis results for display, as will become clear from the discussion of example analyses with reference to Figures 13 to 17.

The study view 450 may also comprise one or more progress indicators. In addition to the visual appearance of the array indicating which elements have measurement data, the progress indicator 460 may provide one or more of: total measurements to run, number of measurements completed, percentage complete, estimated hours remaining (based on an estimated time taken for each measurement).

Figure 13 shows a 3D analysis array 604 with dimensions 605 corresponding with pH, concentration and temperature. Illustrative sub-arrays are shown, with accompanying trend analyses shown in inset graphs. In Figure 13 each of the subarrays is a 1D array. In this example the array comprises elements which all comprise measurement data obtained by dynamic light scattering. The user can select arrays comprising any subset of the elements and analyse trends in the data. In example a, 610, a graph comprising overlaid autocorrelation functions for different pH conditions of a sample is shown with a graph summarising trend of Z-average particle size with respect to pH. In example b, 620, a 1D sub-array oriented in a different direction is selected to explore a trend with respect to concentration. In example b, 620 a graph showing a trend in diffusion coefficient D is shown with respect to concentration. A fit to this graph can be used to obtain an interaction parameter kD. Within the same plane of the matrix, selecting a different data range allows different analysis options, for example in example c, 630 the selected subarray includes a "blank" measurement required for a static light scattering analysis to calculate molecular weight Mw and B22 (second virial coefficient). Example d, 640 shows another example subarray in the temperature direction, showing overlaid particle size distribution plots and a plot showing a trend in derived count rate with respect to temperature.

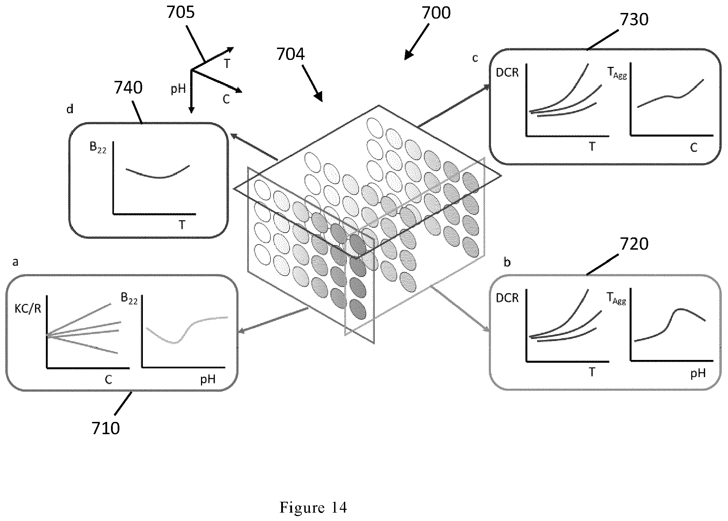

Figure 14 shows how additional composite trends and relationships may be conveniently explored via 3D array 704. The dimensions of the array 704 are the same as those of Figure 13. In example a, 710, multiple rows of the concentration-pH plane of the array 704 are selected and an analysis performed to show a trend in B22 with respect to pH (which may be contrasted with the single value of B22 determined from the graph 630 from the single row selected in Figure 13). In a similar manner in example b, 720, the temperature-pH plane is selected, each row allows an aggregation temperature, TAgg, to be defined, and these plotted as a function of pH. Likewise, in example c, 730 aggregation mechanisms can be compared as function of sample concentration, or transversely, from the same data, interaction parameter B22 can be calculated as a function of temperature as shown in d, 740. This complimentary comparison of secondary parameters can be useful in understanding different underlying mechanisms, for example the significance of electrostatic stability when conformation changes also occur.

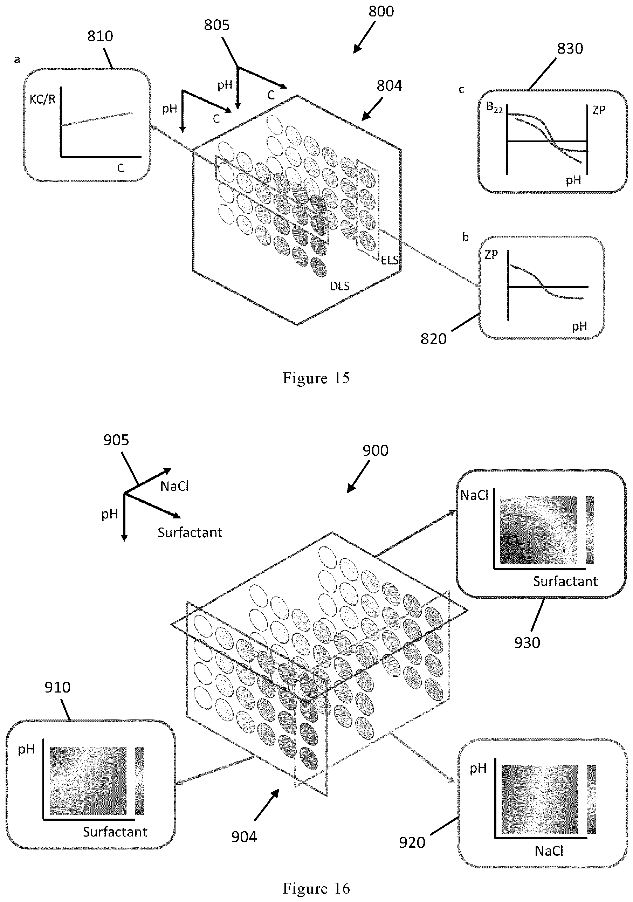

Figure 15 shows a 3D array 804 in which the dimensions 805 comprise pH, temperature and measurement/analysis. One plane of the array 804 comprises measurement data and/or analysis results obtained by DLS, and the other plane of the array 804 comprises measurement data and/or analysis results obtained by ELS (electrophoretic light scattering). This could be expanded to additional dimensions in the same manner as previously described. Maintaining the link between sample properties allows attributes that would otherwise be completely independent to be tracked together. In the example shown, DLS measurement attributes can be compared directly with zeta potential results from ELS measurements, again allowing accessible insight to the contribution of effects such as electrostatic stabilisation on particle interactions, both as a function of other sample properties. Other combinations of measurement methods and analyses are contemplated, for example SLS with DLS, NTA with DLS and so on.

Figure 16 shows a 3D array 904 with dimensions 905 of salt (NaCl) concentration, pH, and surfactant concentration. Where several independent variables (e.g. sample properties) are varied, it may be useful to present this as a 3D plot or intensity/colour map. Again here the linking between data sets allows for convenient representation. In Figure 16 colour maps generated from different orthogonal planes of the matrix. The colour maps 910, 920, 930 respectively illustrate trends in properties of the sample with respect to: pH and surfactant concentration, salt concentration and surfactant concentration, and slat concentration and pH. The scale of each colour map may be based upon various measurement parameters such as particle size, polydispersity etc. but as all of these parameters are already associated with each element of the array 904, they are readily available to be changed between. This allows accessible insights such as the relative interdependencies of the measurement parameters as a function of each variable.

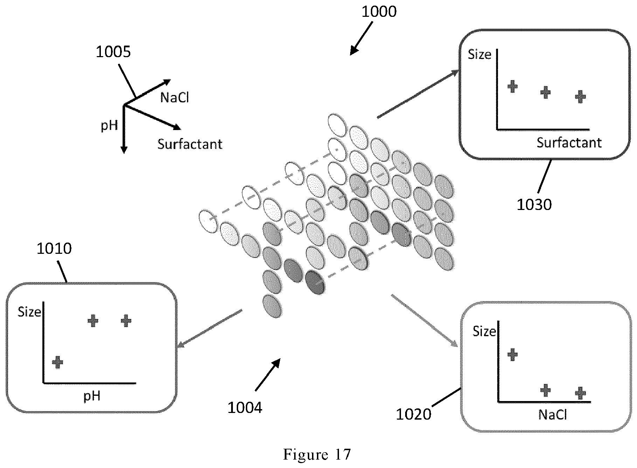

Figure 17 shows a 3D array 1004 in which not all elements comprise measurement data. In this example the elements without data are not visible, leaving a relatively sparse array 1004, but one in which trends can still readily be determined. The dimensions 1005 of the array 1004 are salt concentration, surfactant concentration and pH. Inset trend analyses 1010, 1020, 1030 are performed by selecting 1D subarrays from the array 1004, and respectively show trends in particle size with respect to: pH, salt (NaCl) concentration, and surfactant concentration.

The type of interface described herein allows convenient setup of appropriate studies (comprising a series of experimental measurements and analyses) and/or convenient review of data obtained from such a study. Samples can be selected, for example, with different salt concentration measured at different temperatures to produce a chart of aggregation temperature vs salt concentration, which can conveniently and rapidly be compared to a chart of aggregation temperature vs pH by selecting a different dimension of the study.

A study may constitute results from different measurement methods. For example, stability measurements obtained via DLS would typically be recorded using a different measurement process to zeta potential measurements via ELS (these may likely be recorded using different sample presentation methods also). Where traditionally these separate methods would create separate records for all variables for each measurement mode, an array interface according to an embodiment could capture linkages between both measurement types and enable composite trend charts can be generated. An example, non-limiting, advantage of such an approach would be to help visualise differences in apparent colloidal stability and electrostatic stability of a sample as a function of its dispersion conditions.

In a preferred embodiment, this interface would be able to collate information from different instrument types, with relevant data from different systems being associated with the elements. For example, each sample in the array may be measured using a light scattering instrument as described but also a spectroscopy instrument. This combined linkage of data allows a greater flexibility in interrogating different sample behaviours, especially when data from one assay may be indicative of data artefacts from another. For example, DLS may inform the presence of aggregates of a sample which is informative when attempting to assess the significance of transitions identified in a Differential Scanning Calorimetry measurement which may be used within the same study.

In some embodiments, the output charts generated by analysis of selected elements of the array may constitute mapping, such as a colour map based upon a certain parameter, or a phase diagram linking areas of similar properties. The scaling, display, and parameter upon which this is presented may be user defined, inferred automatically by the computer based upon the measurement options selected by the user, or selected automatically based upon some logic. For example, this may include a classification method such as a principal component analysis or pareto ranking, or regression/fitting, i.e., in some cases, apparent particle size derived from a series of measurements may change very little, but polydispersity index may change significantly. In this example, the system may identify this trend automatically and present this to the user to additionally simplify and speed up data interpretation.

In some embodiments or user cases, the array should include elements with no measurement results (e.g. for which no measurements are planned or exist). Such empty elements of the array may not be displayed. For example, a temperature trend may only be applied to one concentration of sample within a study where several concentrations are measured. Additionally, there may be scenarios such as in a Design of Experiment, where a combination of full factorial and extreme value only measurements are performed to give an indication of which variables are most significant within a study.

The user interface may comprise a guided workflow for setting up a study. Different insights may be gleaned from different trend types as discussed, so to assist a user in generating all relevant information to their study, a contextual interface may set up the matrix according to either what the user wants to vary or what they want to determine.

For example, for a novice user who wants to set up a kD measurement, selecting this may automatically dictate that a range of sample concentrations need to be measured. If Mw is also to be measured, a blank measurement is needed so the interface will indicate that a sample of zero concentration is required. Alternatively, if a user is interested in measuring a range of concentrations, these can be selected, and the interface indicates what secondary parameters may be derived.

If additional parameters are selected, the appropriate extra dimensions of the study are created/defined (and may be given suggested values). A similar approach can be applied to other measurement types, such as critical micelle concentration which can also be generated from a concentration ramp.

This contextual guidance may also guide the choice of cell type etc. for example, a Mw measurement is better suited to a glass cell with better optical properties than a plastic cell. A data quality guidance indicator system may be provided, where at a glance the elements of the study may be easily reviewed. A visual indication may be provided showing at least one or: measurements that incomplete, measurements that are complete, and measurements with a data quality issue. This is particularly useful in large data sets where an overall trend may be skewed significantly by just one sample measurement within a trend. Existing data quality guidance is usually limited to a list formats which are disconnected from trend analysis in a way that may make it more difficult to identify whether a data quality issue is affecting trends.

A range of trend types have been mentioned in this document, and these should not be seen as limiting and any variable of interest could be tracked within this framework. Additionally a similar approach can be used for measurement types where a composite measurement is used. In such analyses a series of measurements may be necessary to determine a physical parameter of interest. An example is a surface zeta potential measurement, where a measurement is performed at a series of positions away from a sample surface so that a surface zeta potential can be extrapolated.

Although an example has been described in which a single interface is used to set up the study, perform the experiments and trends in the results, it is possible to use separate interfaces to i) setup a study and perform measurements and ii) determine trends from the measurements. For example, a senior scientist may set up the parameters of the study centrally, and then at individual workstations/instruments, the methods to collect this data are pulled from the "study", the appropriate data collected, and then this pushed to a database holding the study data. This approach facilitates the collation of data from different instrument types. In the case of drug formulation for example, measurements may be conducted on the same sample types on a non-exhaustive list of instruments including light scattering, differential scanning calorimetry, chromatography, fluorescence spectroscopy etc.

Although a number of specific examples and embodiments have been described, the scope of the invention should be determined with reference to the accompanying claims.

## Claims

1. A computer implemented method of defining a multi-variable study, comprising:
selecting a plurality of independent variables for analysis of a material property by one or more physical characterisation methods,
determining or receiving a set of values for each of the independent variables;
displaying an array of analyses, the array comprising an element for each combination of values of the independent variables and having a first dimension corresponding with a first independent variable and a second dimension corresponding with a second independent variable;
providing a user interface by which a user can select a subset of the array elements to define a study for analysis; and
determining a trend from the study.

2. The method of claim 1, further comprising configuring an instrument to perform the physical characterisation method to determine analysis data for each element of the study.

3. The method of claim 2, further comprising storing the analysis data in a database comprising a record for each element of the study, wherein each record includes the values of the independent variables corresponding with that element.

4. The method of any preceding claim, further comprising receiving analysis data resulting from performing a physical characterisation process over at least some of the set of values of the independent variables and storing the analysis data in a database.

5. The method of any preceding claim, wherein determining a trend from the study comprises performing an analysis on the analysis data comprised in the study to determine a material property from the analysis data.

6. The method of any preceding claim, wherein the physical characterisation method comprises performing particle characterisation in which scattered light from particles of a sample is detected and a material property is inferred from the scattered light.

7. The method of any preceding claim, wherein the user interface is configured to allow the user to select at least one of: single elements from the array, 1-dimensional sub-arrays of the array; 2-dimensional sub-arrays of the array.

8. The method of any preceding claim, wherein the user interface is configured to display the array as a three dimensional array, in which a third dimension of the array corresponds with a third independent variable.

9. The method of any preceding claim, wherein the user interface comprises a variable selection interface, by which a user can define the variables and define the set of values for each variable.

10. The method of any preceding claim, wherein the user interface comprises an array dimension selection interface, by which a user can define which of the plurality of independent variables comprise the first independent variable, the second independent variable, and optionally the third independent variable.

11. The method of any preceding claim, wherein the user interface is configured to generate one or more trend plots, each plot showing a trend of a material property with respect to the independent variables for the selected elements of the study.

12. The method of claim 11, wherein the study comprises a 2-dimensional sub array of the array, and the one or more trend plots comprise a 3-dimensional plot or map showing the value of the material property with respect to two independent variables.

13. The method of any preceding claim, wherein the user interface is configured to generate one or more data plots, each data plot comprising a data series for each element of the study.

14. An instrument for particle characterisation, the instrument comprising:
a sample holder for holding a sample comprising particles;
a light source for illuminating the sample with a light beam, thereby producing scattered light by the interaction of the light beam with the particles;
a detector arranged to detect the scattered light and thereby produce scattering data;
a computer arranged to receive the scattering data and determine a characteristic of the particles therefrom; wherein the computer is further configured to perform the method of any preceding claim.

15. A non-transient computer readable medium, comprising instructions for configuring one or more processor to perform the method according to any of claims 1 to 13.
